# EUROPÄISCHE PATENTSCHRIFT

(11) **EP 0 647 106 B1**
(45) Veröffentlichungstag und Bekanntmachung des Hinweises auf die Patenterteilung: **04.12.1996**
(21) Anmeldenummer: 93912586.0
(22) Anmeldetag: 12.06.1993
(51) Int. Cl.: A45D 40/18, G02B 5/08, G02B 5/10, G02B 1/10

(54) **VERFAHREN ZUR HERSTELLUNG EINES KUNSTSTOFFSPIEGELS, INSBESONDERE ALS BESTANDTEIL EINES BEHÄLTNISSES FÜR KOSMETISCHE PRODUKTE**
PROCESS FOR PRODUCING A PLASTIC MIRROR, ESPECIALLY AS A COMPONENT OF A COMPACT FOR COSMETIC PRODUCTS
PROCEDE DE FABRICATION D'UN MIROIR EN MATIERE PLASTIQUE, NOTAMMENT COMME CONSTITUANT D'UN RECIPIENT POUR PRODUITS COSMETIQUES

(30) Priorität: 24.06.1992 DE 4220546
(43) Veröffentlichungstag der Anmeldung: 12.04.1995
(73) Patentinhaber: IMMENDORF, Uwe, D-52222 Stolberg (DE); KÄSMACHER, Lothar, D-52222 Stolberg (DE)
(72) Erfinder: IMMENDORF, Uwe, D-52222 Stolberg (DE); KÄSMACHER, Lothar, D-52222 Stolberg (DE)
(74) Vertreter: König, Werner, Dipl.-Ing.
(86) Internationale Anmeldenummer: DE9300513
(87) Internationale Veröffentlichungsnummer: WO9400035

(56) Entgegenhaltungen:
- EP-A- 0 151 985
- WO-A-91/10563
- WO-A-93/10975
- DE-A- 3 116 043
- FR-A- 2 620 008
- JP-A-57 159 825
- US-A- 4 745 003

## Beschreibung

Die Erfindung betrifft ein Verfahren zur Herstellung eines Kunststoffspiegels, insbesondere als Bestandteil eines Behältnisses für kosmetische Produkte, bei dem ein Objektträger aus Kunststoff spritzgegossen wird, dann im Vakuum mit einer Metallschicht bedampft und diese mit einer transparenten Schutzschicht versehen wird.

Ein solches Verfahren ist aus der JP-A 57 159 825 bekannt.

Als in Betracht kommende Kunststoffe werden in dieser Schrift Thermoplastkunststoffe wie Polyethylen, Styrol oder Acryl genannt. Für die Metallisierung soll bevorzugt Aluminium, Silber oder Rhodium verwendet werden. Als transparente Schutzschicht kommt z.B. Polyurethan, Acrylurethan oder Glas in Frage.

Aus der US-A 47 45 003 ist es auch bereits bekannt, als transparente Schutzschicht einen UV-härtenden Schutzlack zu verwenden.

Nach derartigen Verfahren hergestellte Kunststoffspiegel erreichen noch nicht die Brillanz und Planebenheit von Glasspiegeln.

Zur Verbesserung der Oberflächenbeschaffenheit soll nach der EP-A 151 985 deshalb noch eine Zwischenschicht aus Kunststoff auf den Träger aufgebracht werden.

Die Aufgabe der vorliegenden Erfindung besteht nun darin, ein Verfahren zur Herstellung eines Kunsstoffspiegels, insbesondere als Bestandteil eines Behältnisses für kosmetische Produkte, anzugeben, mit dem eine erhöhte Qualität erreichbar ist, die derjenigen von Glasspiegeln praktisch gleichgesetzt werden kann, ohne daß eine Zwischenschicht auf dem Objektträger aufgebracht werden muß.

Die Aufgabe wird bei einem Verfahren der eingangs erwähnten Art erfindungsgemäß dadurch gelöst, daß Spritzgießwerkzeuge mit einer lunkerfreien, planebenen, hochglänzenden Oberfläche verwendet werden und auf die aufgedampfte Metallschicht UV-trocknender, wasserklarer Schutzlack aufgebracht wird und daß das Spritzgießen, Bedampfen, Schutzlackieren und Trocknen kontinuierlich unter Reinraumbedingungen mit einer Partikelkonzentration von höchstens 1.000 Partikeln pro Kubikmeter erfolgt.

Ein solcher Kunststoffspiegel ist z.B. als Bestandteil eines Behältnisses für kosmetische Produkte mit diesem insgesamt aus dem gleichen oder einem ähnlichen Kunststoff bestehenden Behältnis insgesamt recyclebar. Glasspiegel haben demgegenüber den gravierenden Nachteil, daß sie von einem solchen Behältnis nicht ohne weiteres gelöst werden können, folglich gemeinsam mit diesem Behältnis in den Abfall gelangen. Ein mit einem Glasspiegel versehenes Behältnis kann nun aber praktisch nicht recycelt werden, da der Kunststoff des Behältnisses und das Glas des Spiegels einem gemeinsamen Recycling nicht zugänglich sind.

Die Reinraumbedingungen von höchstens 1.000 Partikeln pro Kubikmeter haben sich als ausreichend erwiesen, um die gewünschte Qualität des Spiegels zu erreichen.

Das erfindungsgemäße Verfahren kann vorzugsweise so ausgeführt werden, daß der Werkstoff zum Spritzen des Objektträgers über als Film ausgebildete Anbindungen von den Werkzeugkanälen zum Formhohlraum geführt wird. Auf diese Weise wird eine besonders gleichmäßige Füllung der Form erreicht, wodurch die Eigenspannungen im Objektträger reduziert und ein Verziehen weitgehend vermieden wird. Auf diese Weise wird die Qualität des Spiegels weiter gesteigert.

Das erfindungsgemäße Verfahren kann ferner so ausgeführt werden, daß der Objektträger mittels Handlinggeräten ausgehend von den Spritzgießwerkzeugen durch die einzelnen Stationen seiner Bearbeitung bewegt wird. Dies führt zur Vermeidung von Beschädigungen und Verschmutzungen.

Das erfindungsgemäße Verfahren kann ferner so ausgeführt werden, daß der Schutzlack fein zerstäubt auf den Objektträger aufgebracht wird. Daraus ergibt sich eine Vergleichmäßigung in der Verteilung der Schutzschicht.

Das erfindungsgemäße Verfahren kann ferner so ausgeführt werden, daß der Objektträger während des Aufbringens des Schutzlacks in Rotation versetzt wird, wobei die Rotationsachse außerhalb des Objektträgers liegt. Auch dadurch wird die Vergleichmäßigung der dünnen Schutzlackschicht auf dem Objektträger noch gefördet.

Das erfindungsgemäße Verfahren kann ferner so ausgeführt werden, daß als Metallschicht Aluminium aufgedampft wird.

Schließlich kann das erfindungsgemäße Verfahren so ausgeführt werden, daß der Objektträger aus Styrol-Acryl-Nitril (SAN) oder Polycarbonat (PC) gespritzt wird.

Die Objektträger werden nach dem erfindugsgemäßen Verfahren im Spritzgußverfahren aus Kunststoff hergestellt. Als Rohstoff eignen sich dabei insbesondere Styrol-Acryl-Nitril (SAN) und Polycarbonat (PC). Diese beiden Kunststoffe sind relativ formstabil, haben eine geringe Schwindung und lassen die Bildung von geschlossenen, also glatten und hochglänzenden Oberflächen zu.

Das Spritzgießverfahren wird in handelsüblichen Spritzgießmaschinen durchgeführt. Die die Teilekontur und Teileoberfläche bildenden Bestandteile der Spritzgießwerkzeuge (Gesenke) haben eine absolut lunkerfreie, planebene und hochglänzende Oberfläche. Die Anbindungen zwischen Formhohlraum und Werkzeugfließkanälen sind als Film ausgebildet.

Die gespritzten Objektträger werden nach Beendigung des Spritzzyklus mit einem Handlinggerät aus dem Spritzwerkzeug entnommen. Vor dem Einlegen in einen Zwischenpuffer wird der mitentformte Angußverteiler im Bereich des Filmanschnitts sauber vom eigentlichen Spritzling, dem Objektträger, mittels einer Stanzvorrichtung getrennt. Mit Hilfe eines weiteren Handlinggeräts wird dann der Objektträger aus dem Zwischenpuffer entnommen und in eine Hochvakuum-Bedampfungsanlage überführt, in der sich eine Wolframwendel befindet, an die elektrische Spannung angelegt wird. Ein Stab aus einer Aluminiumlegierung wird in die Wolframwendel eingebracht. Die an der Wolframwendel anliegende Spannung führt zu einer Verdampfung des Aluminiumstabes. Der dabei erzeugte Aluminiumdampf legt sich als dünne Schicht auf die Fläche des Objektträgers, die spiegelnd ausgestaltet werden soll.

Nach der Bedampfung wird der Objektträger wiederum von einem Handlinggerät aus der Bedampfungsanlage entnommen und einer Lackierstation übergeben. Hier wird eine exakt vorgegebene Menge eines wasserklaren, UV-trocknenden Schutzlacks auf die bedampfte Fläche des Objektträgers fein zerstäubt aufgebracht. Während dieses Aufbringens wird der Objektträger in eine schnelle Rotation um eine Achse versetzt, die außerhalb des Objektträgers verläuft. Dadurch wird erreicht, daß die feinen Lacktröpfchen sich zu einer gleichmäßigen dünnen Schicht auf dem Objektträger verteilen.

Anschließend wird der so behandelte Objektträger aus der Lackierstation entnommen und einer UV-Licht-Trockenstation übergeben. Hier wird der Schutzlack ausgehärtet. Er kann dann mittels eines Handlinggeräts aus der Trockenstation entnommen und verpackt oder unmittelbar in einen Kosmetik-Container oder dergleichen montiert werden.

Der gesamte Herstellungsprozeß des Kunststoffspiegels verläuft beginnend mit dem Spritzgießen ununterbrochen unter Reinraumbedingungen, also in einem hermetisch gegenüber der Umgebung abgeschirmten Raum. In diesem Raum wird die Partikelkonzentration auf einem Wert von maximal 1000 Partikel pro Kubikmeter Luft gehalten.

Das beschriebene Verfahren eignet sich insbesondere zur Anwendung bei der Herstellung von Kunststoffspiegeln für die Aufnahme von kosmetischen Produkten.

## Patentansprüche

1. Verfahren zur Herstellung eines Kunststoffspiegels, insbesondere als Bestandteil eines Behältnisses für kosmetische Produkte, bei dem ein Objektträger aus Kunststoff spritzgegossen wird, dann im Vakuum mit einer Metallschicht bedampft und diese mit einer transparenten Schutzschicht versehen wird, dadurch gekennzeichnet, daß Spritzgießwerkzeuge mit einer lunkerfreien, planebenen, hochglänzenden Oberfläche verwendet werden und auf die aufgedampfte Metallschicht UV-trocknender, wasserklarer Schutzlack aufgebracht wird und daß das Spritzgießen, Bedampfen, Schutzlackieren und Trocknen kontinuierlich unter Reinraumbedingungen mit einer Partikelkonzentration von höchstens 1.000 Partikeln pro Kubikmeter erfolgt.

2. Verfahren nach Anspruch 1, dadurch gekennzeichnet, daß der Werkstoff zum Spritzen des Objektträgers über als Film ausgebildete Anbindungen von den Werkzeugkanälen zum Formhohlraum geführt wird.

3. Verfahren nach einem der vorhergehenden Ansprüche, dadurch gekennzeichnet, daß der Objektträger mittels Handlinggeräten ausgehend von den Spritzgießwerkzeugen durch die einzelnen Stationen seiner Bearbeitung bewegt wird.

4. Verfahren nach einem der vorhergehenden Ansprüche, dadurch gekennzeichnet, daß der Schutzlack fein zerstäubt auf den Objektträger aufgebracht wird.

5. Verfahren nach Anspruch 4, dadurch gekennzeichnet, daß der Objektträger während des Aufbringens des Schutzlacks in Rotation versetzt wird, wobei die Rotationsachse außerhalb des Objektträgers liegt.

6. Verfahren nach einem der vorhergehenden Ansprüche, dadurch gekennzeichnet, daß als Metallschicht Aluminium aufgedampft wird.

7. Verfahren nach einem der vorhergehenden Ansprüche, dadurch gekennzeichnet, daß der Objektträger aus Styrol-Acryl-Nitril (SAN) oder Polycarbonat (PC) gespritzt wird.

## Claims

1. Process for producing a plastic mirror, especially as a component of a compact for cosmetic products, whereby a plastic base board is injection-moulded, after which a metal coating is applied to the base board via vacuum deposition and the metal coating is then provided with a transparent protective coating, characterised in that injection-moulding tools with a cavity-free, flat, high-lustre surface are employed, that UV-drying, water-white protective lacquer is applied to the vacuum-deposited metal coating, and that the injection-moulding, vacuum deposition, protective lacquering and drying processes take place continuously under clean-room conditions, with a maximum particle concentration of 1,000 particles per cubic metre.

2. Process in accordance with claim 1, characterised in that the material employed for injection-moulding of the base board is conveyed from the tool passages to the mould cavity via gates which take the form of a film.

3. Process in accordance with one of the preceding claims, characterised in that the base board is moved through its individual processing stations by means of manipulators, starting from the injection-moulding tools.

4. Process in accordance with one of the preceding claims, characterised in that the protective lacquer is applied to the base board in finely atomised form.

5. Process in accordance with claim 4, characterised in that the base board is rotated during application of the protective lacquer, whereby the rotational axis lies outside of the base board.

6. Process in accordance with one of the preceding claims, characterised in that aluminium is deposited as the metal coating.

7. Process in accordance with one of the preceding claims, characterised in that the base board is injection-moulded in styrene-acrylic-nitrile (SAN) or polycarbonate (PC).

## Revendications

1. Procédé de fabrication d'un miroir en matière plastique, notamment comme constituant d'un récipient pour produits cosmétiques dans lequel un porte-objets est moulé par injection puis recouvert sous vide d'une couche métallique, laquelle est ensuite dotée d'une couche de protection transparente, caractérisé en ce qu'on utilise des outils d'injection présentant une surface parfaitement polie et plane et sans retassure, et qu'un vernis protecteur transparent séchant aux rayons UV est posé sur la couche métallique appliquée sous vide, et que l'injection, la métallisation sous vide, la pose du vernis protecteur et le séchage sont effectués de manière continue dans une chambre blanche avec une concentration en particules ne dépassant pas 1.000 particules par mètre cube.

2. Procédé selon la revendication 1, caractérisé en ce que la matière plastique utilisée pour l'injection du porte-objets est envoyée sous la forme de points d'injections formant un voile des canaux de l'outil à l'espace creux du moule.

3. Procédé selon l'une des revendications précédentes, caractérisé en ce que le porte-objets est déplacé au moyen d'appareils manipulateurs de l'outil d'injection aux différents postes de traitement.

4. Procédé selon l'une des revendications précédentes, caractérisé en ce que le vernis protecteur est appliqué sur le porte-objets par pulvérisation fine.

5. Procédé selon la revendication 4, caractérisé en ce que le porte-objets est mis en rotation pendant l'application du vernis protecteur, l'axe de rotation se trouvant à l'extérieur du porte-objets.

6. Procédé selon l'une des revendications précédentes, caractérisé en ce que la couche métallique appliquée sous vide est de l'aluminium.

7. Procédé selon l'une des revendications précédentes, caractérisé en ce que le porte-objets est injecté en styrène-acrylonitrile (SAN) ou en polycarbonate (PC).
